# EUROPEAN PATENT SPECIFICATION

(11) **EP 0 972 676 B1**
(45) Date of publication and mention of the grant of the patent: **22.03.2000**
(21) Application number: 98830429.1
(22) Date of filing: 15.07.1998
(51) Int. Cl.: B60Q 1/076

(54) **Motor-vehicle headlamp**
Kraftfahrzeug-Scheinwerfer
Phare pour véhicule à moteur

(43) Date of publication of application: 19.01.2000
(73) Proprietor: C.R.F. Società Consortile per Azioni, 10043 Orbassano (TO) (IT)
(72) Inventor: Butera, Francesco, 10043 Orbassano (Torino) (IT); Alessandretti, Giancarlo, 10043 Orbassano (Torino) (IT)
(74) Representative: Notaro, Giancarlo

(56) References cited:
- DE-A- 19 738 494
- FR-A- 2 549 978
- FR-A- 2 655 598

## Description

The present invention relates to motor-vehicle headlamps, of the type comprising:
- a fixed supporting structure,
- a reflective body pivotally mounted on the supporting structure, and
- an actuating device carried by the fixed structure and connected to the pivoting body, for adjustment of the position of the body relative to the fixed structure.

According to the prior art, the above mentioned actuating device is to be remotely driven manually by the driver or alternatively by automatic control means, on the basis of the motor-vehicle load distribution, to obtain a light beam from the headlamp always in a desired direction.

According to a known prior art typically used in this field, the above mentioned actuating device is constituted by an electric motor which controls the position of the pivoting body of the headlamp by means of a screw-and-nut system. This solution is not entirely satisfactory since it is relatively heavy and bulky, and also of relatively high cost.

From FR-A-2 549 978 a similar motor-vehicle headlamp is known, comprising an actuating device with a pair of wires made of a shape memory metal alloy, which operatively connects the fixed structure to the pivoting body of the headlamp so that a tension applied to each of the two wires causes an inclination of the body in a respective adjustment direction; control means being provided for passing electric current selectively through one or the other of said wires in order to cause an increase of their temperature by Joule effect and a resulting decrease of their lengths causing a variation of the electric resistance of each wire.

A potentionmeter is used to detect the position of the reflective body.

The object of the present invention is that of providing a motor-vehicle headlamp of this type which is lighter, less bulky and less expensive than the known solutions which have been used and proposed heretofore.

In order to achieve this object, the invention provides a motor-vehicle headlamp of the above indicated type, characterized in that the above mentioned variation of the electric resistance of each wire is used to detect the position of the reflective body and for controlling the passage of electric current through the two wires as a function of the position of the body of the headlamp thus detected.

It is to be noted that the use of wires made of a shape memory metal alloy in order to control the position of a pivoting member, specifically a motor-vehicle rear view mirror, is also known for example from EP-A-0 173 433. The wires made of shape memory metal alloys, typically nickel and titanium alloys, have been known for a long time and described in the technical literature. When a predetermined transition temperature is reached, such as in the order of 100°C, they undergo a contraction, decreasing their length.

Particularly advantageous embodiments of the invention will be described in the following, with reference to the annexed drawings, given purely by way of non limiting example, in which:
figure **1** is a cross-sectional view of a first embodiment of a motor-vehicle headlamp according to the present invention,
figure **2** is a cross-sectional view of a second embodiment of a headlamp according to the invention, and
figures **3**, **4** are views along arrow III and IV of figure 2.

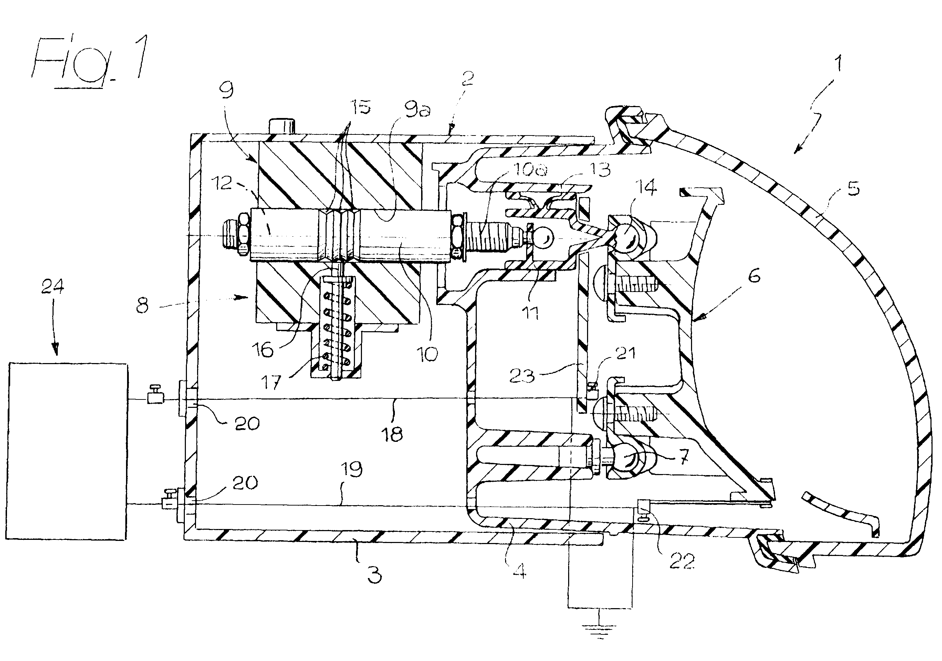

In figure 1, reference numeral 1 generally designates a motor-vehicle headlamp comprising a fixed structure 2 of plastic material, including a hollow body 3 opened at front in which another supporting body 4 is inserted, which is also made of plastic material, to whose front the transparent element 5 of the headlamp is connected. In the drawing, the lamp of the headlamp and the associated supporting means and electric connection means are not shown, since these details can be made in any known way and since they do not fall within the scope of the present invention. Furthermore, the elimination of these details from the drawings renders the latter easier and simpler to understand.

Reference numeral 6 generally designates the reflective body of the headlamp which is pivotally mounted onto a spherical support 7 secured to the fixed supporting structure 4.

The reflective body 6 may assume three different operative positions, corresponding to the emitted light beam pointing upwardly, horizontally and downwardly, which are defined by position reference means 8 including a body 9 secured to the structure 3 and having a cylindrical guiding cavity 9a within which there is slidably mounted a cylindrical stem 10 through which a screw 10a extends which is adjustable in position and connected at one end to a slidable element 11 which is guided within a tubular guiding portion 13 of the fixed structure 4. The slidable element 11 is swivelly connected at 14 to the reflective body 6. The cylindrical stem 10 has three circumferential grooves 15 for the selective engagement of a transverse pin 16 pushed by a spring 17. A rotation of the reflective body 6 around the swivel 7 causes a snap engagement of the transverse pin 16 in sequence into the peripheral grooves 15, thus locking the reflective body 6 in the selected position among the three possible positions.

The position of the reflective body 6 is controlled by means of two wires 18, 19 made of a shape memory metal alloy, which connect two clamps 20 provided on the fixed structure 3 to two clamps 21, 22 spaced therefrom. The clamp 22 is directly connected to the structure of the reflective body 6, on one side relative to swivel 7. The clamp 21 is arranged on the opposite side of swivel 7 at a plate 23 which is operatively connected to the slidable element 11. This arrangement is such that the application of a tension to any one of the two wires 18, 19 causes a rotation of the reflective body 6 in a corresponding adjustment direction. More precisely, a contraction of wire 18 causes an anti-clockwise rotation (with reference to figure 1) of the reflective body 6 relative to swivel 7, whereas a contraction of the wire 19 causes a clockwise rotation of the reflective body 6 relative to swivel 7.

Reference numeral 24 generally designates electronic control means, made in any known way, which are for performing the following functions: passing an electric current selectively through wire 18 or wire 19 in order to increase the temperature thereof and thus causing a contraction in length; detecting the variation of electric resistance of the wires 18, 19 and hence determining the position of the reflective body 6, and finally controlling the passage of electric current through wires 18, 19 as a function of the position of the reflective body 6 thus detected.

As clearly apparent from the foregoing description, the headlamp according to the invention is able to efficiently control the position of the reflective body 6 of the headlamp 1 by means which are simple, inexpensive, and have reduced weight and bulk.

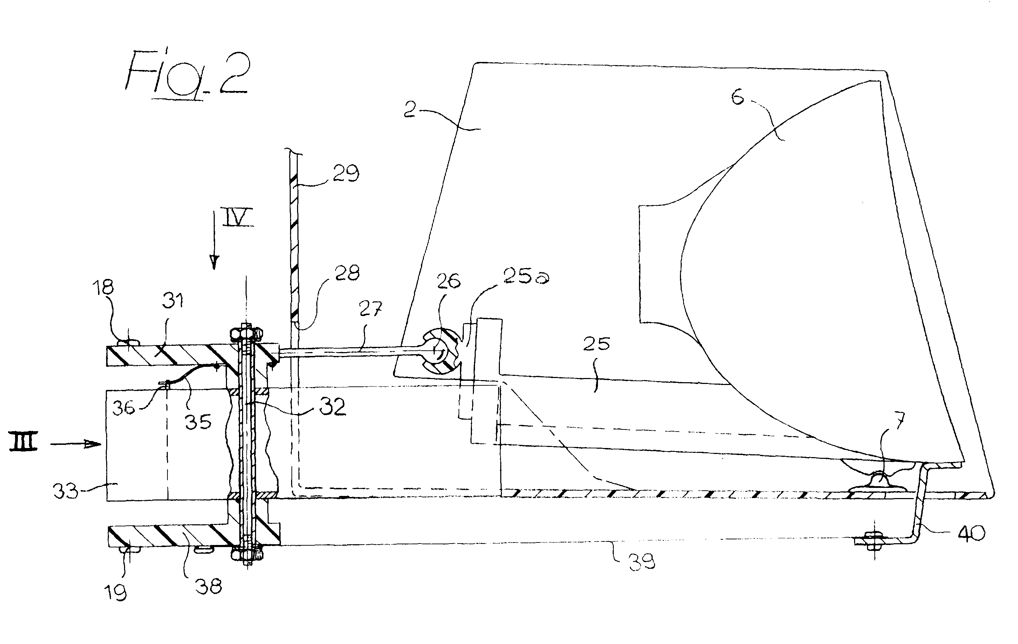

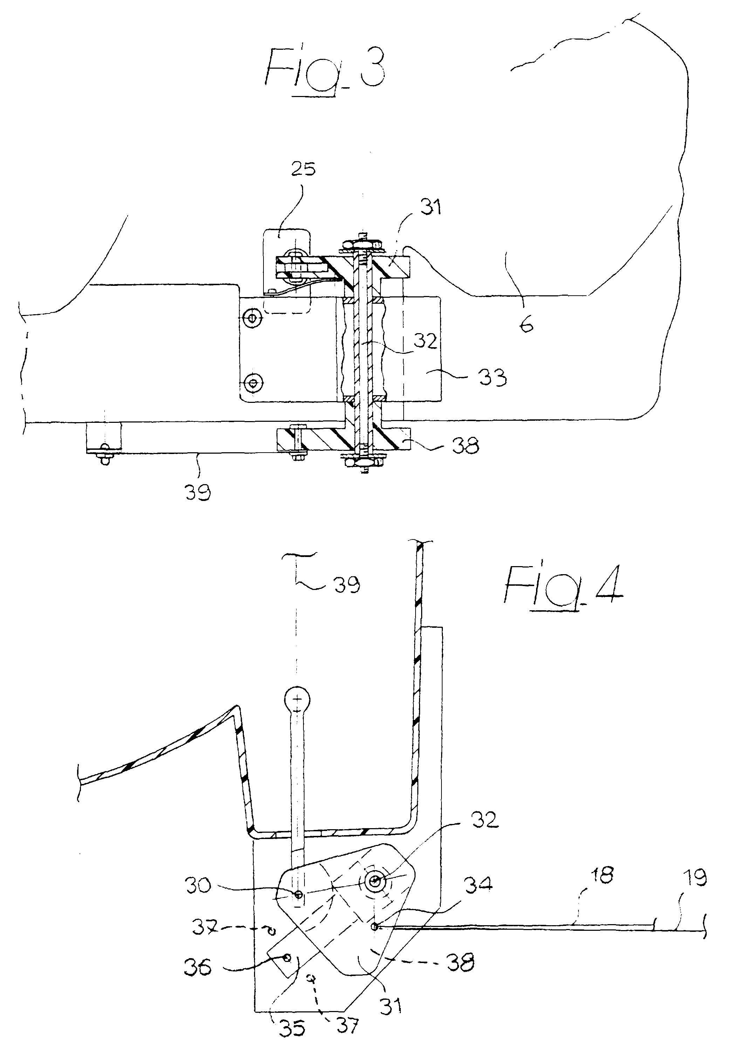

Naturally, the position reference means 8 may be also completely different from those shown purely by way of example in figure 1. For instance, it would be possible to operatively associate the reflective body 6 with an elastic pivoting leaf ending with a feeler pin adapted to cooperate selectively with a number of notches provided in the fixed structure, similarly to what will be described with reference to the second embodiment shown in figures 2-4.

With reference to these last figures, the embodiment shown therein has the advantage, with respect to the embodiment of figure 1, of arranging the wires of shape memory alloy spaced apart from the lamp of the headlamp, so as to avoid any risk that the heat generated by the lamp may affect the operation of the shape memory wires. With reference in particular to figure 2, the reflective body 6 is swivelly mounted at 7 on the fixed structure 2 and has a rear appendage 25 which extends away from the reflective body 6 up to one end 25a which is swivelly connected at 26 to a tie-rod 27. The opposite end of the tie-rod 27 projects from the fixed structure of the headlamp through an aperture 28 of a wall 29 and is connected at 30 (figure 4) to a plate 31 which is freely pivotally mounted around a vertical pin 32 carried by a further appendage 33 of the fixed structure 2. The plate 31 is further connected at 34 to the end of a shape memory wire 18 whose opposite end (not shown in figure 4) is connected to a fixed clamp 20 and also to electronic control means 24. At the lower surface of plate 31 there is connected an elastic leaf 35 ending with a feeler pin 36 which cooperates with three notches 37 provided on the upper surface of appendage 33 in order to define a reference for the three possible positions of the reflective element 6. The pin 32 projects downwardly into appendage 33 with a portion on which there is freely pivotally mounted a further plate 38, parallel to plate 31 which is connected by means of a wire 39 to a bracket 40 secured to the lower part of the reflective body 6. The plate 38, which can be caused to rotate around pin 32 independently from plate 31, is controlled by a shape memory wire 19.

In operation, by causing a contraction of wire 18, an anti-clockwise rotation (with reference to figure 4) of the upper plate 31 is obtained so that the tie-rod 27 moves leftwardly in figure 2 (or downwardly in figure 4) thus causing an anti-clockwise rotation of the reflective body 6 around the swivel 7, again with reference to figure 2. Instead, by causing a contraction of wire 19, a rotation of plate 38 is caused, again in an anti-clockwise direction, with reference to figure 4, and a resulting movement is obtained of the wire 39 (leftwardly with reference to figure 2 and downwardly with reference to figure 4) which causes a clockwise rotation of the reflective body 6 around swivel 7, also with reference to figure 2. As clearly apparent, the solution shown in figures 2-4 has the advantage of arranging the two shape memory wires 18, 19 spaced apart from the reflective body 6, so as to avoid any risk that the heat generated by the lamp of the headlamp may affect their behaviour. Naturally, as already indicated, the position reference means 8 shown in figure 1 could be replaced with a device similar to leaf 35 shown in figures 2-4.

Furthermore, while the principle of the invention remains the same, the details of construction and the embodiments may widely vary with respect to what has been described and illustrated purely by way of example, without departing from the scope of the present invention.

## Claims

1. Motor-vehicle headlamp, comprising:
- a fixed supporting structure (2),
- a reflective body (6) pivotally mounted on the fixed supporting structure (2), and
- an actuating device (18, 19) carried by the fixed supporting structure (2) and connected to the pivoting body of the headlamp (6), for adjustment of the position of the reflective body (6) relative to the fixed structure (2),
- said actuating device comprising a pair of wires (18, 19) made of a shape memory metal alloy, which operatively connect the fixed structure (2) to the reflective body (6) so that a tension applied to each of the two wires (18, 19) causes an inclination of the reflective body (6) in a respective adjustment direction;
- control means (24) being provided for passing an electric current selectively through one or the other of said wires (18, 19) in order to cause an increase of their temperature by Joule effect and a resulting decrease of their lengths, thus causing a variation of the electric resistance of each wire (18, 19),
characterized in that the variation of the electric resistance of each wire is used to determine the position of the reflective body (6) and for controlling the passage of electric current through the wires (18, 19) on the basis of the position of the reflective body (6) thus detected.

2. Headlamp according to claim 1, characterized in that with the reflective body (6) there are associated position reference means (8) able to define a plurality of predetermined adjustment positions of the reflective body (6).

3. Headlamp according to claim 2, characterized in that said position reference means comprise a slidable stem (10) having a plurality of circumferential grooves (15) and cooperating with a transverse pin (16) biassed by a spring (17) into selective engagement with said circumferential grooves (15).

4. Headlamp according to claim 2, characterized in that said position reference means comprise an elastic leaf (35) pivotable relative to a fixed structure (33) as a result of the movement of the reflective body (6) and carrying a feeler pin (36) cooperating selectively with a plurality of notches (37) provided in the fixed structure (33) to define a plurality of predetermined adjustment positions of the reflective body (6).

5. Headlamp according to claim 1, characterized in that there are provided transmission means (31, 27 and 38, 39) for connecting each of said two shape memory wires (18, 19) to the reflective body (6) so that said wires are spaced from the reflective body (6) and therefore are not subjected to temperature variations caused by the lamp of the headlamp.

6. Headlamp according to claim 5, characterized in that the two shape memory wires (18, 19) are respectively connected to two plates (31, 38) freely pivotally mounted around a pin (32) carried by the fixed supporting structure (2), independently from each other, said plates (31, 38) on their turn being connected by a tie-rod (27) and a metal wire (39), respectively, to the reflective body (6) of the headlamp, at a point located on opposite sides relative to the swivel connection (7) of the reflective body (6) to the fixed supporting structure (2).

## Patentansprüche

1. Kraftfahrzeug-Scheinwerfer umfassend:
- eine feststehende Tragestruktur (2),
- einen reflektierenden Körper (6), der auf der feststehenden Tragestruktur (2) drehbar angebracht ist, und
- eine Betätigungsvorrichtung (18, 19), die von der feststehenden Tragestruktur (2) getragen wird, und die mit dem drehbaren Körper (6) des Scheinwerfers verbunden ist, zur Einstellung der Position des reflektierenden Körpers (6) gegenüber der feststehenden Struktur (2),
- wobei die Betätigungseinrichtung ein Paar von Drähten (18, 19) aus einer Shape Memory Metalllegierung aufweist, die die feststehende Struktur (2) zur Betätigung derart mit dem reflektierenden Körper (6) verbinden, daß eine an jeden Draht (18, 19) angelegte Spannung zu einer Neigung des reflektierenden Körpers (6) in eine entsprechende Einstellungsrichtung führt,
- eine Steuerungseinrichtung (24) zur selektiven Durchführung von elektrischem Strom durch den einen oder den anderen der beiden Drähte (18, 19) um eine Erhöhung von deren Temperatur infolge des Joule-Effektes und eine daraus folgende Verminderung von deren Länge herbeizuführen, sodaß sich eine Veränderung des elektrischen Widerstandes jedes Drahtes (18, 19) ergibt,
**dadurch gekennzeichnet, daß**
- die Veränderung des elektrischen Widerstandes jedes Drahtes zur Bestimmung der Position des reflektierenden Körpers (6) und zur Steuerung des Durchflußes von elektrischem Strom durch die Drähte (18, 19) auf der Grundlage der derart bestimmten Position des reflektierenden Körpers (6) benutzt wird.

2. Scheinwerfer nach Anspruch 1, dadurch gekennzeichnet, daß dem reflektierenden Körper (6) Positionsbezugseinrichtungen (8) zugeordnet sind, die geeignet sind, eine Mehrzahl von vorbestimmten Einstellungspositionen des reflektierenden Körpers (6) zu definieren.

3. Scheinwerfer nach Anspruch 2, dadurch gekennzeichnet, daß die Positionsbezugseinrichtungen (8) einen verschiebbaren Schaft (10) mit einer Mehrzahl von Umfangsnuten (15) aufweisen und mit einem transversalen Stift (16) zusammenwirken, der durch eine Feder (17) in selektiven Eingriff mit den Umfangsnuten (15) gebracht wird.

4. Scheinwerfer nach Anspruch 2, dadurch gekennzeichnet, daß die Positionsbezugseinrichtungen ein elastisches Blattelement (35) aufweisen, das infolge der Bewegung des reflektierenden Körpers (6) relativ zu einer feststehenden Struktur (33) drehbar ist und das einen Fühlerstift (36) trägt, der selektiv mit einer Mehrzahl von in der feststehenden Struktur (33) vorgesehenen Ausnehmungen (37) zusammenwirkt, um eine Mehrzahl von vorbestimmten Einstellungspositionen des reflektierenden Körpers (6) zu definieren.

5. Scheinwerfer nach Anspruch 1, gekennzeichnet durch Übertragungseinrichtungen (31, 27 und 38, 39) zur Verbindung jedes der Shape Memory Drähte (18, 19) mit dem reflektierenden Körper (6), sodaß die Drähte von dem reflektierenden Körper (6) beabstandet sind und somit keinen durch die Lampe des Scheinwerfers verursachten Temperaturschwankungen ausgesetzt sind.

6. Scheinwerfer nach Anspruch 5, dadurch gekennzeichnet, daß die beiden Shape Memory Drähte (18, 19) mit jeweils einer Platte (31, 38) verbunden sind, die um einen von der feststehenden Tragestruktur (2) getragenen Stift (32) frei und unabhängig voneinander drehbar sind, wobei die Platten (31, 38) ihrerseits mittels einer Verbindungsstange (27) bzw. einem Metalldraht (39) mit dem reflektierenden Körper (6) des Scheinwerfers an einem Punkt verbunden sind, der der Drehgelenkverbindung (7) des reflektierenden Körpers (6) mit der feststehenden Tragestruktur (2) gegenüberliegt.

## Revendications

1. Phare de véhicule à moteur, comportant:
- une structure support fixe (2),
- un élément réfléchissant (6) monté avec liberté de pivotement sur la structure support fixe (2),
- un dispositif de manoeuvre (18, 19) porté par la structure support fixe (2) et relié à l'élément pivotant (6) du phare pour réglage de la position de l'élément réfléchissant (6) par rapport à la structure fixe (2).
- ledit dispositif de manoeuvre comprenant une paire de conducteurs (18, 19) faits d'un alliage métallique à mémoire de forme, qui relient fonctionnellement la structure fixe (2) à l'élément réfléchissant (6) de façon qu'une tension appliquée à chacun des deux conducteurs (18, 19) provoque une inclinaison de l'élément réfléchissant (6) dans une direction de réglage respective;
- des moyens de commande (24) étant prévus pour faire passer sélectivement un courant électrique par l'un ou l'autre des deux conducteurs (18, 19) pour provoquer une augmentation de leur température par effet joule et une diminution résultante de leurs longueurs, provoquant ainsi une variation de la résistance électrique de chaque conducteur (18, 19),
caractérisé par le fait que la variation de la résistance électrique de chaque conducteur sert à déterminer la position de l'élément réfléchissant (6) et à commander le passage du courant électrique à travers les conducteurs (18, 19) sur la base de la position de l'élément réfléchissant (6) ainsi détectée.

2. Phare selon la revendication 1, caractérisé par le fait qu'à l'élément réfléchissant (6) sont associés des moyens (8) de référence de position capables de définir une pluralité de positions de réglage prédéterminées de l'élément réfléchissant (6).

3. Phare selon la revendication 2, caractérisé par le fait que lesdits moyens de référence de position comportent une tige coulissante (10) présentant une pluralité de rainures circonférentielles (15) et coopérant avec une goupille transversale (16) contrainte par un ressort (17) à venir sélectivement en prise avec lesdites rainures circonférentielles (15).

4. Phare selon la revendication 2, caractérisé par le fait que lesdits moyens de référence de position comportent une lame élastique (35) qui peut pivoter par rapport à une structure fixe (33) comme résultat du mouvement de l'élément réfléchissant (6) et portant une goupille palpeuse (36) coopérant sélectivement avec une pluralité d'encoches (37) prévues dans la structure fixe (33) pour définir une pluralité de positions de réglage prédéterminées de l'élément réfléchissant (6).

5. Phare selon la revendication 1, caractérisé par le fait qu'il y a des moyens de transmission (31, 27 et 38, 39) pour relier chacun des deux conducteurs à mémoire de forme (18, 19) à l'élément réfléchissant (6) de façon que lesdits conducteurs soient espacés de l'élément réfléchissant (6) et ne soient donc pas soumis aux variations de température provoquées par l'ampoule du phare.

6. Phare selon la revendication 5, caractérisé par le fait que les deux conducteurs à mémoire de forme (18, 19) sont respectivement reliés à deux plaques (31, 38) qui sont montées, autour d'un axe (32) porté par la structure support fixe (2), avec liberté de pivoter indépendamment l'une de l'autre, lesdites plaques (31, 38) étant à leur tour reliées, par une barre d'accouplement (27) et un fil métallique (39), respectivement, à l'élément réfléchissant (6) du phare, en un point situé des côtés opposés de la liaison à joint pivotant (7) de l'élément réfléchissant (6) avec la structure support fixe (2).
